## Europäisches Patentamt
## European Patent Office
## Office européen des brevets

(19)

(11) Numéro de publication : **0 161 171**
**B1**

(12)
# FASCICULE DE BREVET EUROPÉEN

(45) Date de publication du fascicule du brevet :
23.12.87

(51) Int. Cl.⁴ : **F 16 M    1/04**

(21) Numéro de dépôt : **85400718.4**

(22) Date de dépôt : **10.04.85**

(54) **Bridage des carters de machine constitués d'au moins deux parties dont l'une est en un métal de relativement faible dureté.**

(30) Priorité : **10.04.84 FR 8405651**

(43) Date de publication de la demande :
**13.11.85 Bulletin 85/46**

(45) Mention de la délivrance du brevet :
**23.12.87 Bulletin 87/52**

(84) Etats contractants désignés :
**AT BE CH DE GB IT LI LU NL SE**

(56) Documents cités :
**FR-A- 1 140 309**
**FR-A- 1 466 275**
**US-A- 2 176 322**
**US-A- 3 923 432**

(73) Titulaire : **REXROTH-SIGMA**
**91 boulevard Irène-Joliot-Curie**
**F-69634 Vénissieux Cedex (FR)**

(72) Inventeur : **Bitton, Georges**
**32, rue de la Glacière**
**F-69600 Oullins (FR)**

(74) Mandataire : **Gorree, Jean-Michel et al**
**Cabinet Plasseraud 84, rue d'Amsterdam**
**F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des perfectionnements apportés au bridage des carters de machine comportant au moins deux parties de carters (par exemple un corps central de carter et un flasque d'extrémité) assemblées mécaniquement l'une à l'autre par des organes de serrage, les deux parties de carter étant toutes deux métalliques, l'une au moins de ces deux parties de carter (première partie) étant soumise à des efforts déformant susceptibles de provoquer des déplacements relatifs de faibles amplitudes (microdéplacements) des deux faces en regard de ces deux parties de carter, ladite première partie étant constituée en un métal de relativement faible dureté.

Il est courant actuellement de constituer des carters de machine par assemblage d'un corps central de carter en fonte ou en un alliage d'aluminium obtenu de fonderie avec une ou plusieurs autres pièces, telles que des flasques d'extrémités constituées en un métal (par exemple en acier) relativement plus dur que les précédents, les flasques et le corps central étant assemblés par boulonnage.

En particulier, lorsque la machine renfermée dans le carter fonctionne de façon cadencée des contraintes importantes (pouvant atteindre plusieurs tonnes) peuvent pour certaines machines, s'exercer sur les pièces composantes du carter, soit du fait de réactions mécaniques, soit du fait de pressions internes élevées. Il en résulte une déformation alternée du corps de carter et une flexion alternée du ou des flasques, ce qui occasionne, au niveau des surfaces en contact du corps de carter et des flasques, des déplacements relatifs de très faibles amplitudes qui sont générateurs de corrosion (« fretting corrosion ») détruisant ces surfaces en contact. Ce phénomène a tendance à accélérer la relaxation des organes (vis ou boulon) d'assemblage.

L'invention a essentiellement pour but de remédier autant que faire se peut, à ce problème et de trouver une disposition qui permette, de façon simple et peu coûteuse, de prolonger notablement la durée de vie des carters de machine.

A cette fin, l'invention prévoit que, entre les faces en regard des deux parties de carter est interposée une plaque épousant approximativement le contour des faces en regard des deux parties de carter, mais possédant une superficie sensiblement inférieure à celle de la surface desdites faces en regard de deux parties de carter, la plaque étant constituée en un métal de dureté supérieure à celle du métal constitutif de la susdite première partie et le bord correspondant de la plaque étant suffisamment vif pour mordre dans le métal de relativement faible dureté.

L'expérience prouve que le carter d'une pompe hydraulique à engrenage, équipé conformément à l'invention, voyait sa durée de vie augmentée dans des proportions étonnantes.

La Demanderesse pense que, d'une part, la suppression de tout dégagement ou gorge dans le carter évite notablement l'affaiblissement dudit carter que de plus, la plaque en métal s'imprimant dans le métal relativement tendre, déformé élastiquement, constitutif de la première partie de carter (par exemple le corps central du carter), le bord de la plaque ainsi incrusté dans le métal relativement moins dur procure un ancrage suffisant pour empêcher les déplacements transversaux de très faible amplitude de cette première partie de carter. L'amélioration du frettage du carter conduit à une meilleure résistance dans le temps des différentes pièces composantes. Le carter peut supporter un nombre d'applications d'efforts alternés de plusieurs fois (3 fois, voire 5 fois) supérieur à celui que pouvait supporter un carter conçu classiquement.

De plus, la configuration géométrique particulière conférée par la présence de la plaque coincée entre les deux faces en regard des deux parties de carter conduit, dans le cas où l'on souhaite assurer une étanchéité de l'assemblage des différentes pièces, à considérer la gorge ainsi constituée comme apte à recevoir un joint d'étanchéité, l'épaisseur de la plaque étant déterminée en fonction de l'épaisseur du joint. Une telle disposition est particulièrement avantageuse car elle évite la nécessité d'usiner, dans l'une des faces en regard, une gorge apte à recevoir ledit joint.

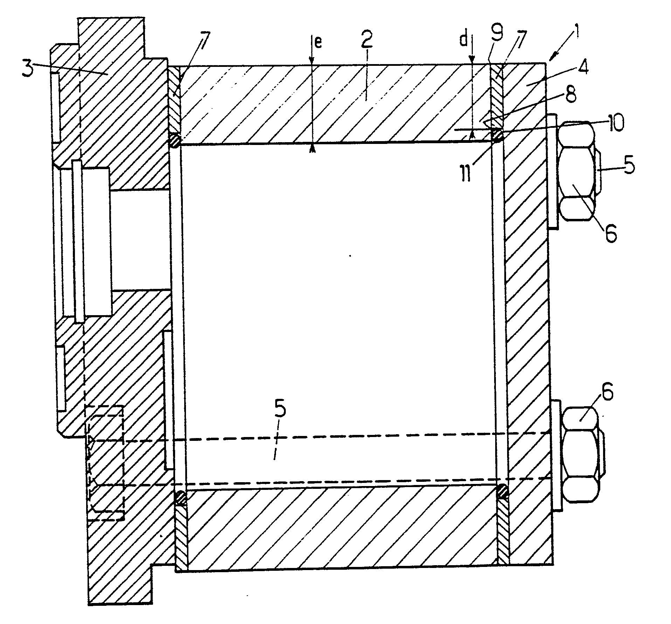

L'invention sera mieux comprise à la lecture de la description détaillée qui suit d'un mode de réalisation de l'invention donné à titre d'exemple dans le cadre d'une application particulière ; dans cette application on se réfère au dessin annexé sur lequel la figure unique est une vue de côté en coupe, d'un carter agencé conformément à l'invention.

Le carter 1 (qui est par exemple celui d'une pompe à engrenage) comprend un corps central de carter 2 constitué en alliage d'aluminium ou en fonte et deux flasques d'extrémité 3 et 4 respectivement, constitués, par exemple en acier. Des tirants, constitués par des tiges filetées et des boulons 6, assurent l'assemblage des pièces composantes du carter.

Pour plus de lisibilité de la figure et simplifier la description, les organes de la machine disposés à l'intérieur du carter n'ont pas été représentés.

Conformément à l'invention, entre le corps de carter 2 et le flasque 3, d'une part, et entre le corps de carter 2 et le flasque 4, d'autre part, ont été interposées respectivement deux plaques 7 constituées en un métal plus dur que le métal constitutif du corps de carter 2 ; les plaques 7 sont avantageusement obtenues par découpage d'une tôle d'acier.

Pour pouvoir remplir son rôle, chaque plaque 7 est découpée pour épouser approximativement la surface de contact du corps de carter 2 avec le flasque correspondant 3 ou 4, avec toutefois une dimension transversale d sensiblement inférieure à la dimension transversale correspondante ou épaisseur e du corps de carter 2. La différence entre les dimensions d et e peut être située d'un seul côté (par exemple vers l'intérieur du carter dans l'exemple représenté) : dans ce cas le bord 8 de la plaque 7, qui est vif est à même de mordre dans le métal du corps de carter 2 et de procurer ainsi un blocage de la paroi latérale dudit corps contre tout déplacement radial, notamment vers l'extérieur.

Bien entendu, la différence entre les dimensions d et e peut être répartie de part et d'autre de la plaque 7 (c'est-à-dire intérieurement et extérieurement au carter) ; dans ce cas non seulement le bord 8 mais aussi le bord opposé 9, de la plaque 7 peuvent mordre le métal constitutif du corps de carter 2 ; le phénomène d'ancrage s'en trouve amélioré d'autant, et tout déplacement de la paroi latérale du corps de carter est empêché aussi bien vers l'intérieur que vers l'extérieur.

L'agencement conforme à l'invention procure un avantage supplémentaire lorsque, comme c'est le cas dans l'exemple pris en considération, on souhaite assurer un assemblage étanche des pièces composantes du carter.

En raison du retrait du bord de la plaque 7 par rapport à la face interne du corps de carter, les faces adjacentes du corps de carter 2, du flasque 3 ou 4 et de la plaque 7 délimitent une gorge 10 à l'intérieur de laquelle peut être pincé un joint d'étanchéité 11, comme représenté sur la figure. Le joint est alors simplement mis en place au cours de l'assemblage des pièces composantes, et il n'est plus besoin d'usiner une gorge de joint dans l'une ou l'autre des faces en regard du corps de carter 2 ou du flasque 3 ou 4, comme c'est le cas auparavant. Le coût de fabrication du carter s'en trouve diminué d'autant.

**Revendications**

1. Carter (1) de machine comportant au moins deux parties de carter (2 ; 3, 4), par exemple un corps central de carter (2) et un flasque d'extrémité (3, 4), assemblées mécaniquement l'une à l'autre par des organes de serrage (5, 6), les deux parties de carter étant toutes deux métalliques, l'une au moins (2) de ces deux parties de carter (première partie) étant soumise à des efforts déformant susceptibles de provoquer des déplacements relatifs de faibles amplitudes (microdéplacements) des deux faces en regard de ces deux parties de carter ladite première partie (2) étant constituée en un métal de relativement faible dureté, caractérisé en ce que — pour éviter ces microdéplacements relatifs ainsi que la corrosion locale qui en résulte et le relâchement consécutif des organes de serrage — entre les faces en regard des deux parties de carter est interposée une plaque (7) épousant approximativement le contour des faces en regard des deux parties de carter, mais possédant une superficie sensiblement inférieure à celle de la surface desdites faces en regard de deux parties de carter, en ce que la plaque (7) est constituée en un métal de dureté supérieure à celle du métal constitutif de la susdite première partie (2) et en ce que le bord correspondant (8 ; 9) de la plaque est suffisamment vif pour mordre dans le métal de relativement faible dureté.

2. Carter de machine selon la revendication 1, caractérisé en ce que la première partie de carter est constituée en fonte ou en alliage d'aluminium et en ce que la plaque est en acier.

3. Carter de machine selon la revendication 1 ou 2, caractérisé en ce que, dans la gorge (10) délimitée par les faces adjacentes des deux parties de carter (2 ; 3, 4) et la plaque (7) est logé un joint d'étanchéité (11).

**Claims**

1. A machine casing (1) comprising at least two casing parts (2 ; 3, 4), for example a central casing body (2) and an end flange (3, 4) assembled mechanically together by clamping members (5, 6), the two casing parts being both made from metal, one at least (2) of these two casing parts (first part) being subjected to deforming forces likely to cause relative low amplitude movements (micromovements) of the two opposite faces of these two casing parts, said first part (2) being made from a metal of relatively low hardness, characterized in that — so as to avoid these relative micromovements as well as the local corrosion which results therefrom and the consequent slackening of the clamping members — between the opposite faces of the two casing parts is inserted a plate (7) taking on approximately the shape of the contour of the opposite faces of the two casing parts, but having an area substantially less than that of the surface of said opposite faces of the two casing parts, in that the plate (7) is made from metal of a hardness greater than that of the metal forming said first part (2) and in that the corresponding edge (8 ; 9) of the plate is sufficiently sharp to bite into the metal of relatively low hardness.

2. The machine casing according to claim 1, characterized in that the first casing part is made from cast metal or alluminium alloy and in that the plate is made from steel.

3. The machine casing according to claim 1 or 2 characterized in that, in the groove (10) defined by the adjacent faces of the two casing parts (2 ; 3, 4) and the plate (7), is housed a sealing joint (11).

**Patentansprüche**

1. Maschinengehäuse (1) mit zumindest zwei Gehäuseteilen (2 ; 3, 4), z. B. einem zentralen Gehäusekörper (2) und einem Endschild (3, 4), die miteinander mechanisch durch Spannorgane (5, 6) verbunden sind, wobei beide Gehäuseteile aus Metall bestehen und zumindest der einer (2) der beiden Gehäuseteile (erster Teil) Verformungskräften ausgesetzt ist, die Relativbewegungen mit kleiner Amplitude (Mikrobewegungen) der beiden einander gegenüberliegenden Seiten der beiden Gehäuseteile hervorrufen können, und wobei der erste Teil (2) aus einem Metall geringer Härte besteht, dadurch gekennzeichnet, daß zur Vermeidung dieser relativen Mikrobewegungen sowie der daraus resultierenden örtlichen Korrosion und dem Nachlassen der Spannorgane zwischen die einander gegenüberliegenden Seiten der beiden Gehäuseteile eine Platte (7) eingeschaltet ist, die etwa der Kontur der beiden einander gegenüberliegenden Seiten der beiden Gehäuseteile folgt, jedoch eine Oberfläche hat, die merkbar kleiner als jene der einander gegenüberliegenden Seiten der beiden Gehäuseteile ist, daß das Metall der Platte (7) größere Härte als das Metall des ersten Teiles (2) hat, und daß der entsprechende Rand (8 ; 9) der Platte ausreichend scharf ist, um in das Metall relativ geringerer Härte einzudringen.

2. Maschinengehäuse nach Anspruch 1, dadurch gekennzeichnet, daß der erste Gehäuseteil aus Gußeisen oder einer Aluminiumlegierung besteht, wogegen die Platte aus Stahl besteht.

3. Maschinengehäuse nach Anspruch 1 oder 2, dadurch gekennzeichnet, daß in der Ausnehmung (10), welche durch die benachbarten Seiten der beiden Gehäuseteile (2 ; 3, 4) und die Platte (7) gebildet ist, eine Dichtung (11) angeordnet ist.